(19) Europäisches Patentamt / European Patent Office / Office européen des brevets

(11) **EP 2 861 941 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **13734655.7**

(22) Anmeldetag: **18.06.2013**

(51) Int Cl.:
**G01F 1/84** ^(2006.01)

(86) Internationale Anmeldenummer:
**PCT/EP2013/001792**

(87) Internationale Veröffentlichungsnummer:
**WO 2013/189589 (27.12.2013 Gazette 2013/52)**

(54) **VERFAHREN ZUM BETREIBEN EINES RESONANZMESSSYSTEMS**

METHOD OF OPERATING A RESONANCE MEASURING SYSTEM

PROCÉDÉ D'OPÉRATION D'UN SYSTÈME DE MESURE À RÉSONANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2012 DE 102012011935**
**18.06.2012 DE 102012011934**

(43) Veröffentlichungstag der Anmeldung:
**22.04.2015 Patentblatt 2015/17**

(73) Patentinhaber: **KROHNE Messtechnik GmbH**
**47058 Duisburg (DE)**

(72) Erfinder:
• **KOLAHI, Kourosh**
**47051 Duisburg (DE)**
• **STORM, Ralf**
**45131 Essen (DE)**
• **POREMBA, Andreas**
**42107 Wuppertal (DE)**

(74) Vertreter: **Gesthuysen Patent- und Rechtsanwälte**
**Patentanwälte**
**Huyssenallee 100**
**45128 Essen (DE)**

(56) Entgegenhaltungen:
**EP-A2- 2 418 748          WO-A1-2008/003629**
**US-A1- 2007 119 263**

EP 2 861 941 B1

## Beschreibung

Die Erfindung betrifft ein Verfahren zum Betreiben eines Resonanzmesssystems, insbesondere eines Coriolis-Massedurchflussmessgeräts, wobei das Resonanzmesssystem wenigstens eine elektrische Stelleinrichtung, wenigstens einen elektromagnetischen Antrieb als Schwingungserzeuger und wenigstens ein mit einem Medium wechselwirkendes Schwingelement umfasst, die elektrische Stelleinrichtung ein elektrisches Anregungssignal zur Anregung des elektromagnetischen Antriebs bereitstellt und der elektromagnetische Antrieb das Schwingelement zur Schwingung in wenigstens einer Eigenform anregt.

Resonanzmesssysteme der vorgenannten Art sind seit vielen Jahren bekannt, nicht nur in Form von Coriolis-Massedurchflussmessgeräten, sondern auch als Dichtemessgeräte oder Füllstandwächter nach dem Stimmgabel-Prinzip, als Quarzwagen und Bandviskosimeter u.a.m. Diese Resonanzmesssysteme stehen mit einem Prozess/Prozessmedium in Verbindung, wobei sich Prozess und Prozessmedium und Resonanzmesssystem wechselseitig beeinflussen.

Im Folgenden werden Resonanzmesssysteme am Beispiel von Coriolis-Massedurchflussmessgeräten behandelt, was nicht einschränkend zu verstehen ist. Es spielt keine Rolle, ob es sich um Coriolis-Massedurchflussmessgeräte mit einem oder mehreren Messrohren, mit geraden oder gebogenen Messrohren handelt. Als Resonanzmesssysteme werden vorliegend ganz allgemein solche Systeme bezeichnet, bei denen Informationen über die zu bestimmenden Prozessgrößen (Messgrößen) in den Eigenfrequenzen verschlüsselt sind und/oder solche Systeme, bei denen Arbeitspunkte auf die Eigenfrequenzen des Messsystems gelegt werden. Auf alle unter diese Definition fallenden Systeme sind die nachfolgenden Ausführungen anwendbar. Bei Coriolis-Massedurchflussmessgeräten entspricht das Messrohr dem Schwingelement des Resonanzmesssystems; auch diese besondere Ausgestaltung des Schwingelements stellt keine Einschränkung für die allgemein auf Resonanzmesssysteme anwendbare Lehre dar.

Als Coriolis-Massedurchflussmessgeräte ausgebildete Resonanzmesssysteme werden vor allem in der industriellen Prozessmesstechnik dort eingesetzt, wo mit hoher Genauigkeit Masseströme bestimmt werden müssen. Die Funktionsweise von Coriolis-Massedurchflussmessgeräten beruht darauf, dass wenigstens ein von einem Medium durchströmtes Messrohr - das Schwingelement - von einem Schwingungserzeuger zu einer Schwingung angeregt wird, wobei dieser Schwingungserzeuger ein elektromagnetischer Antrieb ist. Bei einem solchen elektromagnetischen Antrieb wird üblicherweise eine Spule von einem elektrischen Strom durchflossen, wobei mit dem Spulenstrom unmittelbar eine Kraftwirkung auf das Schwingelement verbunden ist. Bei Coriolis-Massedurchflussmessgeräten beruht die Funktionsweise darauf, dass das massebehaftete Medium aufgrund der durch zwei orthogonale Bewegungen - die der Strömung und die des Messrohres - hervorgerufene Coriolis-Trägheitskraft auf die Wandung des Messrohres rückwirkt. Diese Rückwirkung des Mediums auf das Messrohr führt zu einer Änderung der Messrohrschwingung im Vergleich zu dem undurchströmten Schwingungszustand des Messrohres. Durch Erfassung dieser Besonderheiten der Schwingungen des durchströmten Coriolis-Messrohrs kann der Massedurchfluss durch das Messrohr mit hoher Genauigkeit bestimmt werden.

Von besonderer Bedeutung sind die Eigenfrequenzen des Coriolis-Massedurchflussmessgeräts bzw. der schwingfähigen Teile des Coriolis-Massedurchflussmessgeräts, im Wesentlichen also die Eigenfrequenzen des Messrohrs als Schwingelement, weil die Arbeitspunkte des Coriolis-Massedurchflussmessgerät üblicherweise auf Eigenfrequenzen des Messrohres gelegt werden, um die erforderlichen Schwingungen für die Induktion der Corioliskräfte mit einem minimalen Energieaufwand einprägen zu können. Die dann von dem Messrohr ausgeführten Schwingungen weisen eine bestimmte Form auf, die als Eigenform der jeweiligen Anregung bezeichnet wird. Ein weiterer Grund für die besondere Bedeutung von Eigenfrequenzen bei Coriolis-Massedurchflussmessgeräten ist die unmittelbare physikalische Verknüpfung zwischen der Eigenfrequenz des durchströmten Messrohrs und der effektiv ausgelenkten Schwingmasse (Messrohr und Messe des Mediums im Messrohr); über diesen Zusammenhang kann die Dichte des Mediums bestimmt werden.

Aus dem Stand der Technik ist bekannt, dass zur Anregung des Schwingelements von einem Regler ein harmonisches Basissignal als Reglerausgangssignal in Form einer sinusförmigen Spannung erzeugt wird und diese sinusförmige Spannung die elektrische Stelleinrichtung ansteuert, wobei die elektrische Stelleinrichtung die Aufgabe hat, an ihrem Ausgang eine entsprechende Leistung zur Verfügung zu stellen, um den elektromagnetischen Antrieb in geeigneter Weise und mit ausreichender Leistung ansteuern zu können; die elektrische Stelleinrichtung ist damit praktisch das leistungsmäßige Bindeglied zwischen dem Regler und dem elektromagnetischen Antrieb des Resonanzmesssystems. Üblicherweise sind bekannte Coriolis-Massedurchflussmessgeräte auch mit einem Schwingungsaufnehmer ausgestattet, mit dem die Schwingung des Schwingelements erfasst wird, denn in der Schwingung des mit einem Medium wechselwirkenden Schwingelements liegt üblicherweise die interessierende physikalische Information über das Medium, beispielsweise der Durchfluss, die Dichte und die Viskosität.

Bei Resonanzmesssystemen ist in der industriellen Praxis die zur Verfügung stehende elektrische Leistung aus verschiedenen Gründen häufig beschränkt. Ein Grund für eine solche Beschränkung kann beispielsweise darin liegen, dass das Resonanzmesssystem für die Zündschutzart "Eigensicherheit" ausgelegt ist. Daraus ergeben sich Stellgrößenbeschränkungen, die beim Anfahren und Halten vorbestimmter Arbeitspunkte zu Begrenzungen des elektrischen Anregungssignals führen und damit zu Nichtlinearitäten führen. Die Offenlegungsschrift US 2007/119263 A1 offenbart die Begrenzung eines Antriebsstromes auf einen Maximalwert und die Anpassung der Antriebsspannung (bzw. des Sollwertes der Sensorspannung) auf einen Wert, der diese Begrenzung ermöglicht.

Gemäß der Offenlegungsschrift EP 2 418 748 A2 werden die Bauteile, von denen die Zündschutzart abhängt, mit nicht mehr als zwei Dritteln ihres maximalen Stroms, ihrer maximalen Spannung und ihrer maximalen Leistung betrieben; dabei sind der maximale Strom, die maximale Spannung und die maximale Leistung auf den Bemessungswert der Bauteile, die Einbaubedingungen und den festgelegten Temperaturbereich bezogen. Diese Maßnahmen dienen beispielsweise der Eigensicherheit der Energieversorgung eines Coriolis-Durchflussmessgeräts.

Der Erfindung liegt die Erkenntnis zugrunde, dass die beispielsweise durch Stellgrößenbeschränkungen hervorgerufenen Nichtlinearitäten zu unerwünschten multifrequenten Anregungen des Resonanzmesssystems führen. Beispielsweise wird die Belastung des Resonanzmesssystems bei Messung mehrphasiger Strömungen oder hochviskoser Materialen so groß, dass Begrenzungen in der Antriebskette und insbesondere in der elektrischen Stelleinrichtung wirksam werden. Dadurch wird das Resonanzmesssystem nicht nur bei vorbestimmten Frequenzen angeregt, sondern auch bei vielen unerwünschten Frequenzen. Dies ändert den Arbeitspunkt (Schwingungsform) und damit auch die Eigenschaften des Resonanzmesssystems wie Nullpunkt und Empfindlichkeit, es erhöht das Messrauschen, verringert die Genauigkeit der Auswertung der Messsignale und vergrößert die Messunsicherheit der Messwerte.

Ein weiteres Problem hinsichtlich der Leistungsaufnahme des Resonanzmesssystems und damit der Höhe der elektrischen Anregungssingale kann darin begründet sein, dass das Resonanzmesssystem in verschiedenen vorbestimmten Betriebsarten betrieben werden soll, bei denen bestimmte Baugruppen einen großen Leistungsbedarf haben, so dass der "normale" Messbetrieb aus leistungstechnischen Gründen nicht aufrecht erhalten werden kann. Beispielsweise kann der Leistungsbedarf in einem Diagnose-Betrieb des Schwingelements so hoch sein, dass die Antriebsleistung für den Messbetrieb zu reduzieren ist.

Zur Beeinflussung der Leistungsaufnahme ist bekannt, bestimmte Funktionen des Resonanzmesssystems nur sequenziell auszuführen, so dass der momentane Leistungsbedarf eine vorbestimmte Größe nicht überschreitet. Beispielsweise kann das Antreiben der Messrohre eines Coriolis-Massedurchflussmessgeräts beim Senden der Messdaten ausgesetzt werden, was beispielsweise bei Zwei-Leiter-Resonanzmesssystemen von Bedeutung ist.

Bei vielen aus dem Stand der Technik bekannten Resonanzmesssystemen wird die Leistungsbeschränkung und damit auch die Stellgrößenbeschränkung einfach ignoriert. Diese Vorgehensweise führt jedoch zu undefinierten Zuständen des Resonanzmesssystems und damit zu großen Messunsicherheiten. Ein undefinierter Zustand liegt beispielsweise vor, wenn das Schwingelement zusätzlich zu bekannten und beabsichtigten Anregungen auch mit Signalen unbekannter Frequenz in unbeabsichtigten Eigenformen angeregt wird. Dadurch wird der vorbestimmte Arbeitspunkt unsicher; beispielsweise ist dann bei einem Coriolis-Massedurchflussmessgerät die beabsichtigte definierte Impulsänderung der strömenden Masseteilchen nicht möglich.

Unsicherheiten im Arbeitspunkt bewirken dann auch Modellunsicherheiten bei der Auswertung der Antwortsignale des Schwingelements und damit auch weitere Messunsicherheiten bei den Messergebnissen.

Aufgabe der vorliegenden Erfindung ist es daher, ein Verfahren zum Betreiben eines Resonanzmesssystems anzugeben, bei dem ein Betrieb des Resonanzmesssystems im linearen Bereich auch bei sich verändernden Randbedingungen und Leistungsanforderungen gewährleistet ist.

Die zuvor hergeleitete und aufgezeigte Aufgabe wird bei dem zuvor aufgezeigten bekannten Verfahren dadurch gelöst, dass der durch das elektrische Anregungssignal $u_2$ bewirkte Antrieb-Klemmenstrom $i_{DrA}$ und die durch das elektrische Anregungssignal $u_2$ bewirkte Antrieb-Klemmenspannung $u_{DrA}$ des elektromagnetischen Antriebs durch Messung erfasst werden, aus dem Antrieb-Klemmenstrom $i_{DrA}$ und der Antrieb-Klemmenspannung $u_{DrA}$ die Antrieb-Leistung $S_{DrA}$ bestimmt wird, wobei bei Überschreitung eines vorgegebenen maximalen Antrieb-Klemmenstroms $i_{DrA-max}$ durch den Antrieb-Klemmenstrom $i_{DrA}$ und/oder bei Überschreitung einer vorgegebenen maximalen Antrieb-Klemmenspannung $u_{DrA-max}$ durch die Antrieb-Klemmenspannung $u_{DrA}$ und/oder bei Überschreitung einer vorgegebenen maximalen Antrieb-Leistung $S_{DrA-max}$ durch die Antrieb-Leistung $S_{DrA}$ das elektrische Anregungssignal $u_2$ so auf einen Schrankenwert $u_{2-B}$ beschränkt wird, dass der Antrieb-Klemmenstrom $i_{DrA}$ unterhalb des vorgegebenen maximalen Antrieb-Klemmenstroms $i_{DrA-max}$ und die Antrieb-Klemmenspannung $u_{DrA}$ unterhalb der vorgegebenen maximalen Antrieb-Klemmenspannung $u_{DrA-max}$ und die Antrieb-Leistung $S_{DrA}$ unterhalb der maximalen Antrieb-Leistung $S_{DrA-max}$ bleibt.

Die dem erfindungsgemäßen Verfahren zugrunde liegende Idee beruht also zunächst auf der messtechnischen Erfassung der Klemmengrößen des elektromagnetischen Antriebs, die einen Eindruck von der Lastsituation des Resonanzmesssystems vermitteln, im Falle eines Coriolis-Massedurchflussmessgeräts auch einen Eindruck vermitteln von der Belastung des elektromagnetischen Antriebs selbst (Spule, Dauermagnet und Wirbelströme), den Messrohren und dem durch die Messrohre strömenden Medium. Die Klemmengrößen des elektromagnetischen Antriebs geben wieder, wie die elektrische Stelleinrichtung elektrisch belastet ist. Durch die fortwährende Messung der Antrieb-Klemmenspannung $u_{DrA}$ und des Antrieb-Klemmenstroms $i_{DrA}$ wird grundsätzlich die Möglichkeit geschaffen, ein auch veränderliches Lastverhalten des Resonanzmesssystems zu detektieren.

Sobald erkannt wird, dass das Resonanzmesssystem in einen Begrenzungszustand gerät, also der Antrieb-Klemmenstrom $i_{DrA}$ einen vorgegebenen maximalen Antrieb-Klemmenstrom $i_{DrA-max}$ überschreitet oder die Antrieb-Klemmenspannung $u_{DrA}$ die vorgegebene maximale Antrieb-Klemmenspannung $u_{DrA-max}$ überscheitet oder aber die momentane Antrieb-Leistung $S_{DrA}$ die vorgegebene maximale Antrieb-Leistung $S_{DrA-max}$ überschreitet, wird das Anregungssignal $u_2$ auf einen Schrankenwert $u_{2-B}$ beschränkt, so dass eine Überschreitung der Antrieb-Klemmengrößen oder der Antrieb-Leistung nicht erfolgt. Durch die Reduzierung des elektrischen Anregungssignals $u_2$ wird also gerade verhindert, dass eine der faktisch gegebenen Begrenzungen erreicht wird.

In einer bevorzugten Ausgestaltung des Verfahrens ist vorgesehen, dass aus dem gemessenen Antrieb-Klemmenstrom $i_{DrA}$ und aus der gemessenen Antrieb-Klemmenspannung $u_{DrA}$ der komplexe Lastleitwert G oder der komplexe Lastwiderstand Z bestimmt wird, mit dem die elektrische Stelleinrichtung belastet wird, und dass anhand des komplexen Lastleitwerts G und/oder anhand des komplexen Lastwiderstands Z der Schrankenwert $u_{2-B}$ für das elektrische Anregungssignal $u_2$ bestimmt wird. Durch die zeitliche Messung des Antrieb-Klemmenstroms $i_{DrA}$ und der Antrieb-Klemmenspannung $u_{DrA}$ lässt sich der Lastleitwert G oder der Lastwiderstand Z nach Betrag und Phase bestimmen, mit anderen Worten, es lassen sich der komplexe Lastleitwert G bzw. der komplexe Lastwiderstand Z bestimmen, was für den üblichen Fall der harmonischen Anregung des Resonanzmesssystems von Interesse ist.

In einer besonders bevorzugten Ausgestaltung des Verfahrens ist vorgesehen, dass die Beschränkung des elektrischen Anregungssignals $u_2$ auf den Schrankenwert $u_{2-B}$ erfolgt, indem einer Amplitudenregelung zur Regelung der Amplitude des Schwingelements, ein angepasster, insbesondere geringerer Sollwert für die Amplitude vorgegeben wird.

Im Einzelnen gibt es nun verschiedene Möglichkeiten, das erfindungsgemäße Verfahren auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen

Fig. 1 ein erstes Beispiel für eine nichtlineare Anregung eines Resonanzmesssystems,

Fig. 2 ein weiteres Beispiel für den nichtlinearen Betrieb eines Resonanzmesssystems,

Fig. 3 ein weiteres Beispiel für die nichtlineare Anregung eines Resonanzmesssystems,

Fig. 4 die bei Einsatz des erfindungsgemäßen Verfahrens erzielte gewünschte lineare Betrieb eines Resonanzmesssystems,

Fig. 5 schematisch die Struktur eines Resonanzmesssystems in Form eines Coriolis-Massedurchflussmessgeräts, wie es aus dem Stand der Technik bekannt ist, wie es aber auch für das erfindungsgemäße Verfahren Verwendung finden kann,

Fig. 6 das Ersatzschaltbild des mathematischen Modells eines elektromagnetischen Antriebs und eines gekoppelten Schwingelements in Form eines Messrohres,

Fig. 7 ein Ausführungsbeispiel des beanspruchten Verfahrens zum Betrieb eines Resonanzmesssystems in Blockschaltbilddarstellung und

Fig. 8 eine schematische Darstellung des Verhaltens von AntriebKlemmenspannung und Antrieb-Klemmenstrom bei Strom-, Spannungs- und Leistungsbegrenzung.

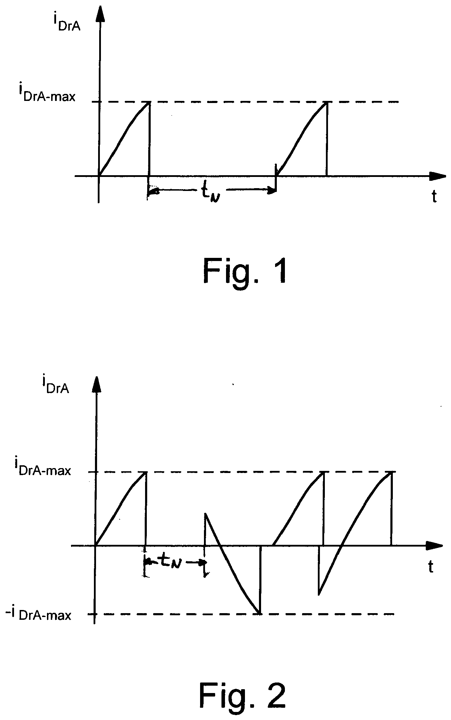

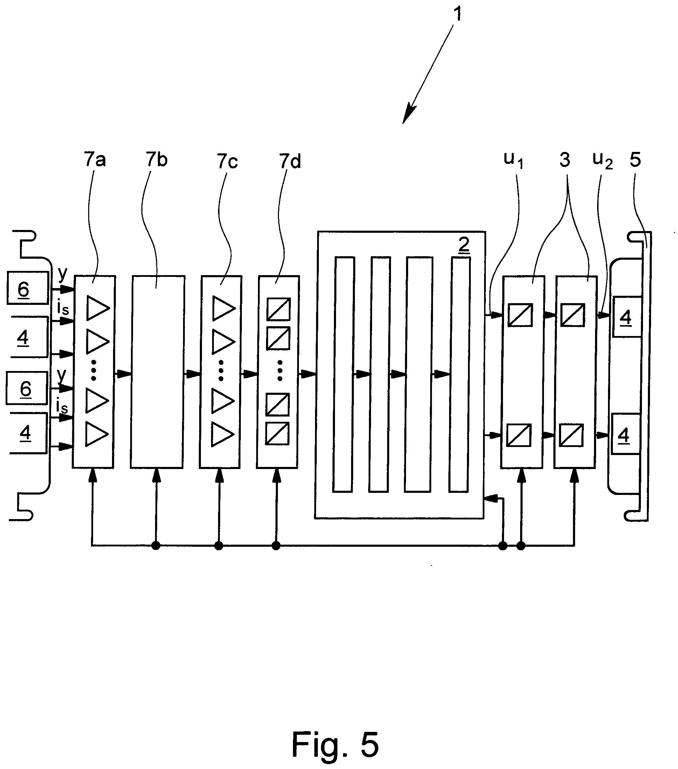

In Fig. 5 ist zunächst ein Resonanzmesssystem 1 dargestellt, das mit den beanspruchten und im Folgenden im Detail beschriebenen Verfahren betrieben wird. Anhand von Fig. 5 soll zunächst ein solches Resonanzmesssystem 1 erläutert werden, bevor verschiedene Betriebssituationen des Resonanzmesssystems erläutert werden, die Gegenstand der Figuren 1 bis 4 sind.

Fig. 5 zeigt ein Resonanzmesssystem 1 in Form eines Coriolis-Massedurchflussmessgeräts, wobei das Resonanzmesssystem 1 einen in einem Signalprozessor implementierten Regler 2, eine elektrische Stelleinrichtung 3 und einen elektromagnetischen Antrieb 4 als Schwingungserzeuger aufweist.

Der elektromagnetische Antrieb 4 hat die Aufgabe, ein Schwingelement 5, vorliegend ein mit einem Medium durchströmbares Messrohr, zu einer Schwingung in einer Eigenform anzuregen. Je nach Art der Eigenform ist dazu lediglich ein einziger elektromagnetischer Antrieb 4 erforderlich, sollen auch höhere Moden angeregt werden, können auch zwei oder mehr elektromagnetische Antriebe 4 erforderlich sein; dies ist für das nachfolgend beschriebene Verfahren zum Betrieb des Resonanzmesssystems 1 nicht von Bedeutung.

In Fig. 5 ist das Resonanzmesssystem 1 in Form des Coriolis-Massedurchflussmessgeräts zweigeteilt dargestellt. Das tatsächlich eine Einheit bildende Coriolis-Massedurchflussmessgerät endet zu einer Hälfte am rechten Bildrand der Figur und beginnt aus Gründen der übersichtlichen Darstellung mit der anderen Hälfte wieder am linken Bildrand der Figur. Dort ist zu erkennen, dass das Resonanzmesssystem 1 ferner auch Schwingungsaufnehmer 6 aufweist, die ein Ausgangssignal y ausgeben, vorliegend in Form eines Geschwindigkeitssignals y, das Auskunft über die Geschwindigkeit der Messrohrbewegung, also des Schwingelements 5, gibt. Der Schwingungsaufnehmer 6 ist zur Durchführung des nachfolgend dargestellten Verfahrens nicht zwingend erforderlich. An die Schwingungsaufnehmer 6 schließt sich eine Mehrzahl von Übertragungselementen an, die im Wesentlichen der Signalaufbereitung dienen, wie beispielsweise eine aus Verstärkern bestehende Anpassungselektronik 7a, ein Hardwaremultiplexer 7b zur Realisierung verschiedener umschaltbarer Messkanäle, eine weitere Anpassungselektronik 7c und ein Analog/Digital-Wandler 7d, der die analogen gemessenen Signale dem Regler 2 in Form digitaler Signale wieder zuführt. Der Regler 2 erzeugt ein Reglerausgangssignal $u_1$ zur Ansteuerung der elektrischen Stelleinrichtung 3, und die elektrische Stelleinrichtung 3 erzeugt nachfolgend ein elektrisches Anregungssignal $u_2$ zur Anregung des elektromagnetischen Antriebs 4.

Es sind verschiedene Verfahren bekannt, bei denen ein zumindest das Schwingelement 5 abbildendes mathematisches Modell 8 des Resonanzmesssystems 1 aufgestellt wird und Parameter des mathematischen Modells 8 durch geeignete Anregungen des Schwingelements 5 und Auswertung des mathematischen Modells 8 identifiziert werden und die identifizierten Parameter und/oder davon abgeleitete Größen zum Betreiben des Resonanzmesssystems 1 herangezogen werden. Das mathematische Modell 8 ist in Fig. 5 als Bestandteil des Reglers 2 dargestellt, wobei alle Verfahren zum Betreiben des Coriolis-Massedurchflussmessgeräts praktisch in Form von Programmen auf einer oder mehreren Recheneinheiten implementiert sind. Das Arbeiten mit mathematischen Modellen 8 ist nicht Gegenstand der vorliegenden Patentanmeldung, ist vielmehr ausführlich dargestellt in anderen Patentanmeldungen, wie beispielsweise der DE 10 2011 012 498 A1 (Mehrphasendetektion) oder der DE 10 2008 059 920 A1 (Selektive Parameteridentifikation). Ein umfangreiches mathematisches Modell 8 wird auch nicht zur Realisierung des hier behandelten Verfahrens benötig. Das Verfahren kann beispielsweise vielmehr schon unter Verwendung ganz einfacher physikalischer Zusammenhänge quantitativ umgesetzt werden, was nachfolgend auch gezeigt wird.

In den Figuren 1 bis 3 sind verschiedene Situationen dargestellt, die es mit dem Einsatz des erfindungsgemäßen Verfahrens zu vermeiden gilt. In Fig. 1 ist der Verlauf des Antrieb-Klemmenstroms $i_{DrA}$ über der Zeit gezeigt, wobei $I_{DrA-max}$ einen vorgebebenen maximalen Antrieb-Klemmenstrom bezeichnet und einen Schwellwert für diesen Strom darstellt. Dargestellt ist der Stromverlauf $i_{DrA}$, wenn beispielsweise eine Ex-Abschaltung - bei Realisierung der Zündschutzart "Eigensicherheit" - aktiv wird. Dies kann der Fall sein beim Überschreiten der vorbestimmten Maximalwerte der Antrieb-Leistung $S_{DrA-max}$, des Antrieb-Klemmenstroms $i_{DrA-max}$ oder der Antrieb-Klemmenspannung $u_{DrA-max}$. In diesem Fall wird das Resonanzmesssystem 1 hardwaremäßig abgeschaltet ("Absturz"). Dieser Fall ist in Fig. 1 für den Antrieb-Klemmenstrom $i_{DrA}$ dargestellt. Nach einem zeitaufwändigen Neustart stürzt das Messsystem gegebenenfalls wiederholt ab, wenn die Ursache - hohe Belastung des Schwingelements - nicht berücksichtigt wird. Das Messsystem kann in diesem Betriebszustand natürlich keine Information über die Prozessgröße liefern. Darüber hinaus ist während der Neustart-Phase $t_N$ keine Kommunikation mit dem Messsystem möglich, so dass keine Diagnose-Daten zur Verfügung stehen.

In Fig. 2 ist ein weiterer undefinierter Zustand des Resonanzmesssystems 1 dargestellt, wenn das elektrische Anregungssignal $u_2$ beim Überschreiten bzw. Unterschreiten einer vorbestimmten Schranke - $I_{DrA-max}$ für den Antrieb-Klemmenstrom, $u_{DrA-max}$ für die Antrieb-Klemmenspannung - abgeschaltet wird. Das Anregungssignal wird nach einer vorbestimmten Wartezeit $t_N$ wieder eingeschaltet. Da diese Wartezeit unabhängig von der Belastung des Schwingelements 5 ist, kommt es gegebenenfalls zu einer unbeabsichtigten und damit unkontrollierten Ansteuerung, die das Schwingelement 5 mit unbekannten Frequenzen in mehreren Eigenfrequenzen anregt. Damit ist aber der Arbeitspunkt des Schwingelements 5 unbekannt und nicht quasistationär. Somit sind auch die Antwortsignale des Schwingelements 5 nur schwer auswertbar, beispielsweise weil der Auswertung ein quasistationär arbeitendes mathematisches Modell 8 zugrunde liegt. Im Ergebnis führt ein solcher Fehler zu hohen Messunsicherheiten bei den Messergebnissen.

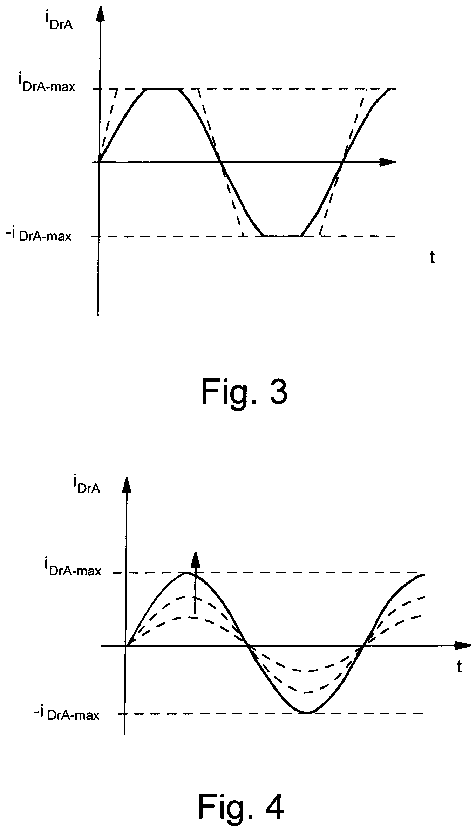

Ein undefinierter Zustand bzw. ein Arbeitsverhalten mit starken Nichtlinearitäten kommt auch dann zustande, wenn, wie in Fig. 3 gezeigt, das elektrische Anregungssignal $u_2$ auf vorbestimmte Maximalwerte beschränkt ist. Im Beispiel von Fig. 3 handelt es sich hier um den Antrieb-Klemmenstrom $i_{DrA}$, der auf einen vorgegebenen maximalen Antrieb-Klemmenstrom $i_{DrA-max}$ für positive Werte wie für negative Werte beschränkt ist. In diesem Fall geht die Anregung von einer harmonischen Anregung bei niedriger Belastung des Schwingelements in eine rechteckförmige Anregung - gestrichelte Linie, gekappte Sinuskurve - bei hoher Belastung über. Dadurch wird - wie bei den oben beschriebenen Fällen in den Figuren 1 und 2 - der Arbeitspunkt unsicher und damit steigt auch die Messunsicherheit der Messergebnisse.

Zur Vermeidung der zuvor anhand der Figuren 1 bis 3 aufgezeigten unkontrollierten Betriebssituationen mit dem massiven Auftreten von Nichtlinearitäten wird erfindungsgemäß für den Betrieb des Resonanzmesssystems 1 nunmehr vorgesehen, dass der durch das elektrische Anregungssignal $u_2$ bewirkte Antrieb-Klemmenstrom $i_{DrA}$ und die durch das elektrische Anregungssignal $u_2$ bewirkte Antrieb-Klemmenspannung $u_{DrA}$ des elektromagnetischen Antriebs 4 durch Messung erfasst werden, aus dem Antrieb-Klemmenstrom $i_{DrA}$ und der Antrieb-Klemmenspannung $u_{DrA}$ die Antrieb-Leistung $S_{DrA}$ bestimmt wird, wobei bei Überschreitung eines vorgegebenen maximalen Antrieb-Klemmenstroms $i_{DrA-max}$ durch den Antrieb-Klemmenstrom $i_{DrA}$ und/oder bei Überschreitung einer vorgegebenen maximalen Antrieb-Klemmenspannung u_{DrA-max} durch die Antrieb-Klemmenspannung u_{DrA} und/oder bei Überschreitung einer vorgegebenen maximalen Antrieb-Leistung S_{DrA-max} durch die Antrieb-Leistung S_{DrA} das elektrische Anregungssignal u_2 so auf einen Schrankenwert u_{2-B} beschränkt wird, dass der Antrieb-Klemmenstrom i_{DrA} unterhalb des vorgegebenen maximalen Antrieb-Klemmenstroms i_{DrA-max} und die Antrieb-Klemmenspannung u_{DrA} unterhalb der vorgegebenen maximalen Antrieb-Klemmenspannung u_{DrA-max} und die Antrieb-Leistung S_{DrA} unterhalb der maximalen Antrieb-Leistung S_{DrA-max} bleibt.

Durch die beschriebene Beschränkung des elektrischen Anregungssignals u_2 auf den Schrankenwert u_{2-B} wird erreicht, dass die Anregung des Resonanzmesssystems bzw. des Schwingungserzeugers in Form der Messrohre eines Coriolis-Massedurchflussmessgeräts so begrenzt wird, dass stets mit einer harmonischen Schwingungen angeregt wird, also lineares Betriebsverhalten beibehalten werden kann. Das mit dem beschriebenen Verfahren bewirkte Betriebsverhalten des Resonanzmesssystems 1 ist dargestellt in Fig. 4, wobei der dort angedeutete Pfeil in Richtung zunehmender Last des elektromagnetischen Antriebs 4 durch den Schwingungserzeuger weist. Im Ergebnis ist jedenfalls zu erkennen, dass das elektrische Anregungssignal u_2 in Abhängigkeit von der elektrischen Last so berechnet und vorgegeben wird, dass zum einen das Anregungssignal - hier in Form des Antrieb-Klemmenstroms i_{DrA} harmonisch bleibt und zum anderen keine der vorbestimmten Extremwerte S_{DrA-max} für die Antrieb-Leistung, i_{DrA-max} für den Antrieb-Klemmenstrom und u_{DrA-max} für die Antrieb-Klemmenspannung überschritten werden. Die elektrischen Eingangsgrößen des Resonanzmesssystems 1, also der Antrieb-Klemmenstrom i_{DrA}, die Antrieb-Klemmenspannung u_{DrA} und die Antrieb-Leistung S_{DrA} - und damit die Belastung des Resonanzmesssystems 1 - werden durch den Prozess gemessen und die Sollwerte für die Arbeitspunkte und/oder die Stellgrößenbeschränkung werden so vorausberechnet und gesetzt, dass die Elemente des Resonanzmesssystems 1 stets im linearen Bereich arbeiten und möglichst keine Abschaltung des Resonanzmesssystems 1 bei hoher Belastung durchgeführt werden muss. Das vorgeschlagene Verfahren setzt die Sollwerte und/oder Stellgrößenbeschränkungen in Abhängigkeit von der aktuellen Belastung des Resonanzmesssystems 1 und in Abhängigkeit von der zur Verfügung stehenden Leistung so, dass alle relevanten Elemente und Einheiten in den Antriebs- und Messketten im linearen Bereich arbeiten.

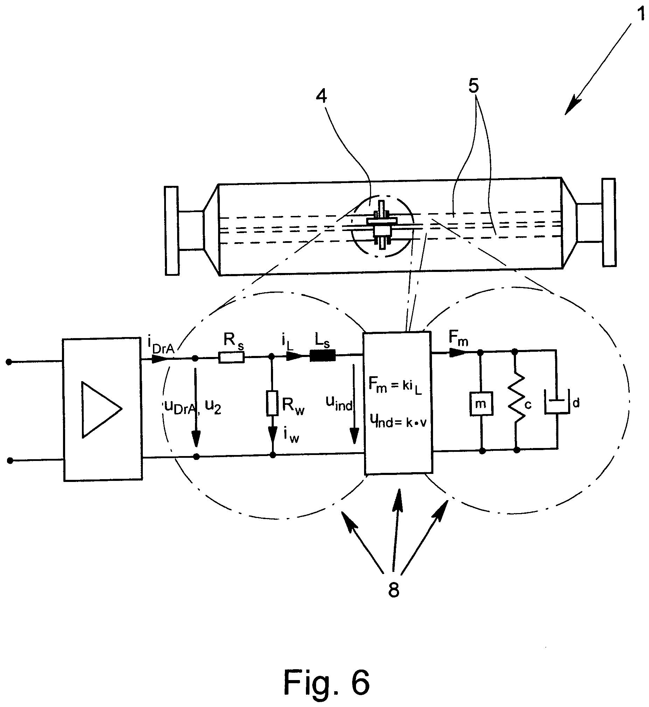

Zum besseren Verständnis der Zusammenhänge sind in Fig. 6 in Form eines Ersatzschaltbildes die physikalischen Zusammenhänge bei einem Resonanzmesssystem 1 in Form eines mathematischen Modells 8 (Ersatzschaltbild) dargestellt; dieses mathematische Modell 8 selbst wird nicht zur Durchführung des beanspruchten Verfahrens benötigt. Im oberen Abschnitt der Fig. 6 ist zunächst ein Coriolis-Massedurchflussmessgerät als Resonanzmesssystem 1 skizziert, wobei zwei Messrohre als Schwingelement 5 angedeutet sind. Ferner ist angedeutet ein elektromagnetischer Antrieb 4, mit dem die Messrohre gegeneinander ausgelenkt werden können und so zur Schwingung angeregt werden. Im unteren Teil der Fig. 6 ist ein Ersatzschaltbild für den elektromagnetischen Antrieb 4 - linke Seite - und für das mit dem Medium wechselwirkende Schwingelement 5 - rechte Seite - dargestellt. Ferner ist dargestellt, dass die elektrische Stelleinrichtung 3 ein elektrisches Anregungssignal u_2 erzeugt zur Anregung des elektromagnetischen Antriebs 4.

Der durch das elektrische Anregungssignal u_2 bewirkte Antrieb-Klemmenstrom i_{DrA} und die durch das elektrische Anregungssignal u_2 bewirkte Antrieb-Klemmenspannung u_{DrA} des elektromagnetischen Antriebs 4 werden durch Messungen erfasst, was hier im Einzelnen nicht dargestellt ist. Bei dem elektrischen Anregungssignal u_2 kann es sich um die Antrieb-Klemmenspannung u_{DrA} oder um den Antrieb-Klemmenstrom i_{DrA} handeln; der verwendete Buchstabe "u" weist also nicht zwingend auf eine Spannung hin. Der Antrieb-Klemmenstrom i_{DrA} kann beispielsweise durch den Spannungsabfall an einem ohmschen Widerstand abgegriffen werden, die Antrieb-Klemmenspannung u_{DrA} kann direkt von einem analogen Messeingang eines digitalen Signalprozessors hochohmig erfasst werden oder von einem separaten Analog/Digital-Wandler digitalisiert werden.

Das hier dargestellte mathematische Modell 8 bildet damit auch die physikalischen Eigenschaften des elektromagnetischen Antriebs 4 nach, so dass Effekte des elektromagnetischen Antriebs 4 in die Berechnung mit einbezogen werden können. Im vorliegenden Fall sind die Parameter des elektromagnetischen Antriebs 4 und des Schwingelements 5 beispielsweise vorgegeben, sie könne aber auch durch geeignete Identifikationsverfahren bestimmt werden, siehe dazu die parallele und noch nicht offengelegte Patentanmeldung DE 10 2012 011 934.8. Wie die Parameter bestimmt werden könnten, ist nicht Gegenstand dieser Anmeldung.

Aus der in Fig. 6 dargestellten Modellvorstellung ist ersichtlich, dass das mathematische Modell 8 den elektromagnetischen Antrieb 4 und das mit dem Medium wechselwirkende Schwingelement 5 insgesamt als Last der elektrischen Stelleinrichtung 3 abbildet, wobei die Last dem Verhältnis aus der Antrieb-Klemmenspannung u_{DrA} und dem Antrieb-Klemmenstrom i_{DrA} entspricht. Es gilt:

$$Z(j\omega) = \frac{U_{DrA}(j\omega)}{I_{DrA}(j\omega)} . \qquad (1)$$

In der vorgenannten gleichungsmäßigen Beschreibung wird davon ausgegangen, dass das elektrische Anregungssignal u_2 ein harmonisches Anregungssignal ist, so dass sich die komplexwertige Formulierung anbietet. Bei Betrachtung von Fig. 6 wird deutlich, dass der komplexe Lastwiderstand insgesamt abhängig ist von den Eigenschaften des Schwingungserzeugers 4 (Induktivität der Spule, ohmscher Widerstand der Spule und Wirbelstromverluste), von den mechanischen Eigenschaften des Schwingelements 5 in Form der Messrohre und auch von den Eigenschaften des mit dem Schwingelement 5 wechselwirkenden Mediums, vorliegend von dem durch die Messrohre strömenden Medium. Der komplexe Lastwiderstand ist also abhängig von elektrischen, mechanischen und strömungsmechanischen Eigenschaften des elektromagnetischen Antriebs 4 und des mit dem Medium wechselwirkenden Schwingelements 5.

In dem in Fig. 6 dargestellten Ersatzschaltbild haben die Ersatzgrößen insgesamt die folgende Bedeutung:

$u_{DrA}$ := Spannung am Ausgang des Leistungsverstärkers (Spannung an der Antriebsspule),

$i_{DrA}$ := Strom am Ausgang des Leistungsverstärkers (Strom durch die Antriebsspule),

$i_L$ := Strom durch die Ersatzinduktivität,

$k$ := Übertragungsbeiwert,

$R_S$ := Ohm'scher Widerstand der Antriebsspule,

$R_W$ := Wirbelstromverluste im elektromagnetischen Antrieb,

$L_S$ := Induktivität der Antriebsspule,

$u_{ind}$ := geschwindigkeitsproportionale Induktionsspannung an der Spule,

$v$ := Messrohrgeschwindigkeit,

$m$ := Schwingmasse der Messrohre und des Messmediums (effektiv schwingende Masse),

$c$ := Federsteifigkeit der Messrohre und des Messmediums (effektive Federsteifigkeit),

$d$ := Dämpfungskoeffizient der Messrohre und des Messmediums (prozessbedingte Dämpfung) und

$F_m$ := Antriebskraft.

Der Widerstand $R_S$ beschreibt den ohmschen Widerstand der von dem elektromagnetischen Antrieb 4 umfassten Antriebsspule. Der Widerstand $R_W$ beschreibt die Wirbelstromverluste im elektromagnetischen Schwingungserzeuger und die Induktivität der Antriebsspule wird durch $L_S$ beschrieben. Von besonderem Interesse ist für die Beurteilung des Bewegungszustandes des Resonanzmesssystems 1 die Phasenlage zwischen dem Strom $i_L$ durch die Induktivität $L_S$ und der Geschwindigkeit des Schwingelements 5. Der ausschließlich durch die Induktivität $L_S$ fließende Strom $i_L$ verursacht eine proportionale Kraftwirkung $F_m$ auf das Schwingelement 5. Aus dem Ersatzschaltbild gemäß Fig. 6 ist sofort ersichtlich, dass der Strom $i_L$ nicht in Phase sein muss zu dem Antrieb-Klemmenstrom $i_{DrA}$. Zur Berechnung der komplexen Last gemäß Gleichung (1) können aus Fig. 6 die folgenden Gleichungen abgeleitet werden:

$$
\begin{aligned}
u_{DrA} &= R_S i_{DrA} + R_W i_W \\
u_{DrA} &= R_S i_{DrA} + L_S \frac{di_L}{dt} + u_{ind} \\
i_{DrA} &= i_L + i_W \\
F_m &= m\dot{v} + dv + c \int v\, d\tau \\
F_m &= k i_L \\
u_{ind} &= kv
\end{aligned}
\qquad (2)
$$

Durch den Übertragungsbeiwert k werden die mathematischen Teilmodelle für den elektromagnetischen Antrieb 4 und das Schwingelement 5 miteinander gekoppelt, wobei gleichermaßen eine Proportionalität existiert zwischen dem Strom $i_L$ durch die Spule im Ersatzschaltbild mit der Induktivität $L_S$ und der dadurch hervorgerufenen Kraftwirkung $F_m$

einerseits, wie andererseits zwischen der Geschwindigkeit v des Messrohrs als Schwingelement 5 und der dadurch erzeugten Rückwirkung in Form der induzierten Spannung $u_{ind}$. Da beide Wirkungen durch ein und denselben elektromagnetischen Antrieb 4 erzeugt werden, gilt für beide Gleichungen tatsächlich der gleiche Übertragungsbeiwert k. Der Übertragungsbeiwert k ist für die Bestimmung vieler interessierender Größen als absoluter Wert nicht zwingend erforderlich, weil häufig nur Relationen von Werten zueinander berücksichtigt werden, weil bestimmte Werte nur hinsichtlich ihrer Phasenlage von Interesse sind, weniger von ihrem Betrag her, und weil in der Praxis entsprechende Werte für k bei einer initialen Kalibrierung bestimmt werden können. Gleichwohl ist es natürlich möglich, für k einen genauen Wert anzugeben, wenngleich die Bestimmung auch einen gewissen messtechnischen Aufwand bedeutet.

In Abhängigkeit davon, ob die elektrische Stelleinrichtung 3 an ihrem Ausgang einen Strom oder eine Spannung treibt und demzufolge entweder der Antrieb-Klemmenstrom $i_{DrA}$ oder die Antrieb-Klemmenspannung $u_{DrA}$ als Ausgangsgröße $u_2$ einstellt, ergeben sich verschiedene Übertragungsfunktionen. Für den Fall, dass sich der Antrieb-Klemmenstrom $i_{DrA}$ als Reaktion auf eine von der elektrischen Stelleinrichtung gelieferte Antrieb-Klemmenspannung $u_{DrA}$ einstellt (U-U-Leistungsverstärker), ergibt sich als Lastleitwert im Bildbereich (Gleichung 3):

$$\frac{I_{DrA}}{U_{DrA}} = G = $$

$$\frac{1}{\left(R_S + R_W\right)} \cdot \frac{L_S m s^3 + (L_S d + R_W m)s^2 + (L_S c + R_W d + k^2)s + R_W c}{L_S m s^3 + \left(L_S d + (R_W \parallel R_S)m\right)s^2 + \left(L_S c + k^2 + (R_W \parallel R_S)d\right)s + (R_W \parallel R_S)c}$$

Für den Fall, dass die elektrische Stelleinrichtung 3 den Antrieb-Klemmenstrom $i_{DrA}$ treibt und sich die Antrieb-Klemmenspannung als Reaktion einstellt, ergibt sich für den komplexen Lastwiderstand (elektrische Stelleinrichtung 3 arbeitet als U-I-Leistungsverstärker):

$$\frac{U_{DrA}}{I_{DrA}} = Z = $$

$$\left(R_S + R_W\right) \cdot \frac{L_S m s^3 + \left(L_S d + (R_W \parallel R_S)m\right)s^2 + \left(L_S c + k^2 + (R_W \parallel R_S)d\right)s + (R_W \parallel R_S)c}{L_S m s^3 + (L_S d + R_W m)s^2 + (L_S c + R_W d + k^2)s + R_W c} \cdot (4)$$

Die beiden Übertragungsfunktionen beschreiben den komplexen Lastleitwert $\underline{G}$ bzw. den komplexen Lastwiderstand $\underline{Z}$, mit dem die elektrische Stelleinrichtung 3 insgesamt, also elektrisch, mechanisch und strömungsmechanisch, belastet wird, nachfolgend einfach als G und Z bezeichnet. Die Parameter der Übertragungsfunktionen können auf sehr unterschiedliche Weise identifiziert werden, beispielsweise indem die Übertragungsfunktionen bei verschiedenen Frequenzen betrachtet werden und bei diesen Frequenzen Messwerte für den Antrieb-Klemmenstrom $i_{DrA}$ und die Antrieb-Klemmenspannung $u_{DrA}$ erfasst und zur Auswertung der Gleichungen und damit des mathematischen Modells 8 verwendet werden.

Die Übertragungsfunktionen gemäß den Gleichungen 3 und 4 beschreiben den komplexen Lastleitwert G bzw. den komplexen Lastwiderstand Z, mit dem der Leistungsteil der Sensorelektronik, also die elektrische Stelleinrichtung 3, insgesamt belastet wird. Die Belastung setzt sich zusammen aus elektrischen, mechanischen und strömungsmechanischen Komponenten. Die Wirkleistung wird im Realteil der komplexen Last umgesetzt und setzt sich zusammen aus Verlusten im Ohmschen Widerstand der Antriebsspule und Wirbelstromverlusten, aus mechanischen Verlusten durch Materialdämpfung und Reibung und aus strömungsbedingten Verlusten.

Zur Veranschaulichung werden die aufgezeigten Zusammenhänge für den komplexen Lastleitwert G bzw. den komplexen Lastwiderstand Z - also die komplexe Last - vereinfacht, indem die Wirbelströme vernachlässigt werden:

$$R_W \to \infty \Rightarrow \frac{I_{DrA}}{U_{DrA}} = \frac{ms^2 + ds + c}{L_S m s^3 + (L_S d + R_S m)s^2 + (L_S c + k^2 + R_S d)s + R_S c}$$

$$\frac{I_{DrA}}{U_{DrA}} = \frac{1}{L_S s + R_S + \dfrac{k^2 s}{ms^2 + ds + c}} \tag{5}$$

bzw.

$$\frac{U_{DrA}}{I_{DrA}} = R_S + sL_S + \frac{k^2 s}{\left(ms^2 + ds + c\right)}$$

Noch anschaulicher wird die Gleichung, wenn die Last im Arbeitspunkt betrachtet wird, d. h. wenn die Betriebsfrequenz der Resonanzfrequenz der ersten Eigenform des Messrohrs entspricht:

$$\omega_0 = \sqrt{\frac{c}{m}} \Rightarrow ms^2 + c = 0 \Rightarrow$$

$$\frac{I_{DrA}}{U_{DrA}} = \frac{1}{jL_S\omega_0 + R_S + \dfrac{k^2}{d}} = \frac{1}{jL_S\omega_0 + R_S + \dfrac{k^2}{d_0 + \Delta d}} \tag{6}$$

bzw.

$$\frac{U_{DrA}}{I_{DrA}} = R_S + j\omega_0 L_S + \frac{k^2}{d} = R_S + j\omega_0 L_S + \frac{k^2}{d_0 + \Delta d}$$

Hier ist $d_0$ die Dämpfungskonstante des Sensors ohne das durch die Messrohre strömende Messmedium. Mit dem Messmedium ändert sich die Dämpfungskonstante um $\Delta d$ beispielsweise infolge der Viskosität oder infolge Sekundärströmung bei mehrphasigen Strömungen. Die Änderung der Dämpfungskonstanten und damit der Last kann insbesondere bei mehrphasigen Strömungen mehrere Zehnerpotenzen betragen.

Die Spannung $u_{DrA}$ bzw. $u_{DrA}$ und der Strom $I_{DrA}$ bzw. $I_{DrA}$ am Ausgang des Leistungsverstärkers über Vorverstärker, Multiplexer, Verstärker, AD/-Wandler und DSP phasenselektiv gemessen. Daraus werden der komplexe Lastwiderstand Z und der komplexe Lastleitwert G bestimmt.

Die vorstehend aufgezeigten gleichungsmäßigen Zusammenhänge erleichtern das Verständnis, welche Faktoren für die tatsächliche Belastung des elektromagnetischen Antriebs 4 eine Rolle spielen und in den komplexen Lastleitwert G bzw. den komplexen Lastwiderstand Z eingehen, insgesamt also in der komplexen Last eine Rolle spielen.

Das zuvor aufgezeigte Verfahren zum Betreiben des Resonanzmesssystems 1 wird vorzugsweise durchgeführt, indem aus dem gemessenen Antrieb-Klemmenstrom $i_{DrA}$ und aus der gemessenen Antrieb-Klemmenspannung $u_{DrA}$ der komplexe Lastleitwert G oder der komplexe Lastwiderstand Z bestimmt wird, mit dem die elektrische Stelleinrichtung 3 belastet wird, und anhand des komplexen Lastleitwerts G und/oder anhand des komplexen Lastwiderstands Z der Schrankenwert $u_{2\text{-}B}$ für das elektrische Anregungssignal $u_2$ bestimmt wird. Wie genau die Bestimmung erfolgt, hängt davon ab, welcher Art die elektrische Stelleinrichtung 3 ist.

Für den Fall, dass die elektrische Stelleinrichtung 3 als gesteuerte Spannungsquelle arbeitet, kann zwangsläufig gezielt nur auf die Antrieb-Klemmenspannung $u_{DrA}$ eingewirkt werden, so dass hier über einen Spannungsgrenzwert die gewünschte Leistungsbegrenzung erzielt werden kann, so dass das Resonanzsystem 1 insgesamt im linearen Bereich arbeitet. Dies kann dadurch erreicht werden, dass einerseits aus dem komplexen Lastleitwert G oder dem komplexen Lastwiderstand Z und andererseits aus dem maximalen Antrieb-Klemmenstrom $i_{DrA\text{-}max}$ ein Spannungsgrenzwert $u_{DrA\text{-}Bl}$ als Schrankenwert $u_{2\text{-}B}$ und/oder aus der der maximalen Antrieb-Leistung $S_{DrA\text{-}max}$ ein Spannungs-

grenzwert u$_{DrA-BS}$ als Schrankenwert u$_{2-B}$ berechnet wird. Vorzugsweise wird sowohl der Spannungsgrenzwert u$_{DrA-BI}$ als Schrankenwert u$_{2-B}$ wie auch der Spannungsgrenzwert u$_{DrA-BS}$ als Schrankenwert u$_{2-B}$ berechnet, und der kleinere der beiden Werte wird als Schrankenwert u$_{2-B}$ für das elektrische Anregungssignal u$_2$ verwendet. Gleichungsmäßig stellt sich der Vorgang wie folgt dar:

$$\left.\begin{array}{c} I_{DrA} > I_{DrA\,max} \\ \vee \\ S_{DrA} = I_{DrA} U_{DrA} > S_{DrA-max} \end{array}\right\} \Rightarrow Z = \frac{U_{DrA}}{I_{DrA}} \Rightarrow \left\{\begin{array}{l} U_{DrA-BI} = Z \cdot I_{DrA-max} \\ U_{DrA-BS} = \sqrt{Z \cdot S_{DrA-max}} \end{array}\right. \Rightarrow$$

$$\Rightarrow \left\{\begin{array}{l} U_{DrA-BI} > U_{DrA-BS} \Rightarrow U_{DrA} = U_{DrA-BS} \\ U_{DrA-BI} < U_{DrA-BS} \Rightarrow U_{DrA} = U_{DrA-BI} \end{array}\right. \tag{7}$$

Die angegebenen Gleichungen (7) greifen nur, falls die Strombegrenzung oder die Leistungsbegrenzung in Kraft treten, andernfalls werden die verwendeten Werte für die Regelung, insbesondere die Amplitudenregelung der Messrohrauslenkung - Messrohrgeschwindigkeit - beibehalten.

Für den Fall, dass die elektrische Stelleinrichtung 3 als gesteuerte Stromquelle arbeitet, kann zwangsläufig gezielt nur auf den Antrieb-Klemmenstrom i$_{DrA}$ eingewirkt werden, so dass hier über einen Stromgrenzwert die gewünschte Leistungsbegrenzung erzielt werden kann, so dass das Resonanzsystem 1 insgesamt im linearen Bereich arbeitet. Dies kann dadurch erreicht werden, dass einerseits aus dem komplexen Lastleitwert G oder dem komplexen Lastwiderstand Z und andererseits aus der maximalen Antrieb-Klemmenspannung u$_{DrA-max}$ ein Stromgrenzwert i$_{DrA-BI}$ als Schrankenwert u$_{2-B}$ und/oder aus der maximalen Antrieb-Leistung S$_{DrA-max}$ ein Stromgrenzwert i$_{DrA-BS}$ als Schrankenwert u$_{2-B}$ berechnet wird. Vorzugsweise wird sowohl der Stromgrenzwert I$_{DrA-BI}$ als Schrankenwert u$_{2-B}$ wie auch der Stromgrenzwert u$_{DrA-BS}$ als Schrankenwert u$_{2-B}$ berechnet, und der kleinere der beiden Werte wird als Schrankenwert u$_{2-B}$ für das elektrische Anregungssignal u$_2$ verwendet. Die Berechnung geschieht analog zu Gleichungsgruppe 7.

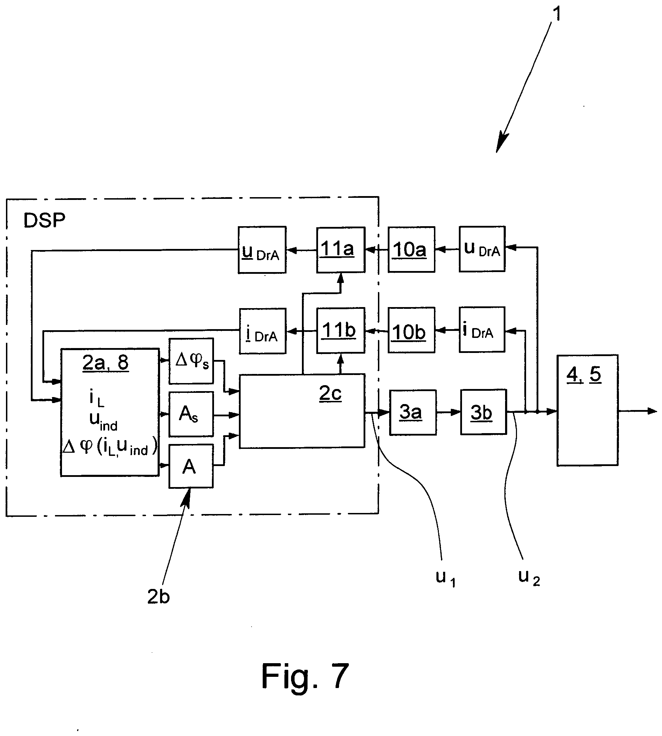

Eine besonders elegante Möglichkeit der Beschränkung des elektrischen Anregungssignals u$_2$ auf den Schrankenwert u$_{2-B}$ erfolgt, indem einer Amplitudenregelung zur Regelung der Amplitude des Schwingelements, ein angepasster, insbesondere geringerer Sollwert für die Amplitude vorgegeben wird. In Fig. 7 ist schematisch die Realisierung eines Regelkreises zum Betrieb des Resonanzmesssystems 1 dargestellt. Das Resonanzmesssystem 1 ist in Form eines Coriolis-Massedurchflussmessgeräts dargestellt, wobei das Resonanzmesssystem 1 einen in einem digitalen Signalprozessor (DSP) implementierten Regler 2 aufweist sowie eine elektrische Stelleinrichtung 3 mit einem Digital/Analog-Wandler 3a und einer spannungsgesteuerten Spannungsquelle 3b als Leistungsteil Der elektromagnetische Antrieb 4 weist eine Spule auf, die das Schwingelement 5 auslenkt und zu Schwingungen anregt. In dem dargestellten Ausführungsbeispiel ist das von der elektrischen Stelleinrichtung 3 erzeugte elektrische Anregungssignal u$_2$ eine Spannung, die gleich der Antrieb-Klemmenspannung u$_{DrA}$ des elektromagnetischen Antriebs 4 ist. Der Antrieb-Klemmenstrom i$_{DrA}$ stellt sich folgerichtig nach Maßgabe der aufgeprägten Spannung u$_{DrA}$, nach Maßgabe der Parameter des elektromagnetischen Antriebs 4 und des Schwingelements 5 sowie nach Maßgabe des Bewegungszustandes des Schwingelements 5 in Zusammenhang mit dem Medium ein. Die Antrieb-Klemmenspannung u$_{DrA}$ und der Antrieb-Klemmenstrom i$_{DrA}$ werden jedenfalls messtechnisch erfasst und mit Analog/Digital-Wandlern 10a, 10b umgesetzt.

In der Fig. 7 ist der Regler 2 zergliedert dargestellt. In dem Reglerteil 2a ist ein mathematisches Modell 8 hinterlegt, so dass hier alle das Modell 8 betreffende Berechnungen stattfinden können. Das hier beanspruchte Verfahren ist allerdings nicht an die Verwendung eines komplizierten mathematischen Modells 8 geknüpft, das Verfahren ist vielmehr auch mit modellosen Regelkreisen anwendbar. In den Reglerteilen 2b sind die eigentlichen Regler implementiert, ganz oben beispielsweise für die Phasenregelung, in der Mitte für die Amplitudenregelung und unten für die Amplitudensteuerung. Ausgänge der Regler 2b sind Stellgrößen, die von dem darauffolgenden Signalgenerator 2c umgesetzt werden. Zur Anregung des Schwingelements 5 werden in dem Signalgenerator 2c zunächst zwei orthogonale harmonische Anregungssignale generiert, aus denen zusammen das Reglerausgangssignal u$_1$ erzeugt wird. Die ebenfalls harmonischen Messgrößen, die über die Analog/Digital-Wandler 10a, 10b dem DSP wieder zugeführt werden, werden in den Demodulatoren 11a, 11b mit Hilfe der orthogonalen Basissignale des Signalgenerators 2c in Signalkomponenten zerlegt, die die Bestimmung der Phasenlage der Signale in Bezug auf das Basissignal gestatten, so dass nach der Demodulation eine Phaseninformation bezogen auf das Ausgangssignal des Signalgenerators 2c vorliegt. Die nach Betrag und Phase bekannte Antrieb-Klemmspannung u$_{DrA}$ und der Antrieb-Klemmenstrom i$_{DrA}$ werden dann im Regler insgesamt so ausgewertet, dass der Sollwert A$_S$ für die Amplitude so angepasst wird, dass der ermittelte Spannungsgrenzwert u$_{DrA-BI}$ bzw. u$_{DrA-BS}$ eingehalten wird.

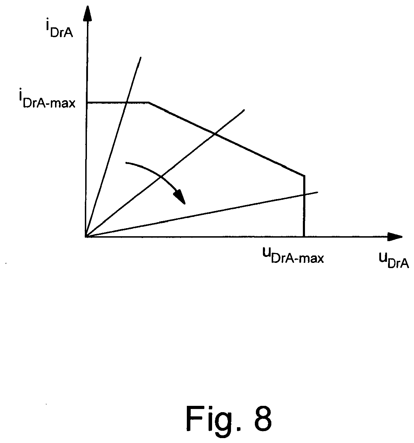

In Fig. 8 ist schließlich dargestellt, dass die elektrische Stelleinrichtung 3 so betrieben wird, dass der bewirkte Antrieb-Klemmenstrom $i_{DrA}$ stets kleiner ist als der vorgegebene maximale Antrieb-Klemmenstrom $i_{DrA-max}$ ist und dass die bewirkte Antrieb-Klemmenspannung $u_{DrA}$ stets kleiner ist als die vorgegebene maximale Antrieb-Klemmenspannung $u_{DrA-max}$ ist und dass die Antrieb-Leistung $S_{DrA}$ stets kleiner ist als die vorgegebene maximale Antrieb-Leistung $S_{DrA-max}$. Der Verlauf für die Leistungsbegrenzung ist hier vereinfacht linear dargestellt. Der bogenförmige Pfeil deutet die Richtung der Arbeitslinie mit zunehmender Last hin. Bei geringen Lasten ist der Stromgrenzwert bestimmend, bei sehr hohen Lasten ist die Spannungsgrenze limitierend, in dem Arbeitsbereich des Resonanzmesssystems zwischen diesen beiden Situationen ist die von der elektrischen Stelleinrichtung 3 maximal lieferbare Leistung beschränkend.

## Patentansprüche

1. Verfahren zum Betreiben eines Resonanzmesssystems (1) in Form eines Coriolis-Massedurchflussmessgeräts, wobei das Resonanzmesssystem (1) wenigstens eine elektrische Stelleinrichtung (3), wenigstens einen elektromagnetischen Antrieb (4) als Schwingungserzeuger und wenigstens ein mit einem Medium wechselwirkendes Schwingelement (5) umfasst, die elektrische Stelleinrichtung (3) ein elektrisches Anregungssignal ($u_2$) zur Anregung des elektromagnetischen Antriebs (4) bereitstellt und der elektromagnetische Antrieb (4) das Schwingelement (5) zur Schwingung in wenigstens einer Eigenform anregt,
   **dadurch gekennzeichnet,**
   **dass** der durch das elektrische Anregungssignal $u_2$ bewirkte Antrieb-Klemmenstrom $i_{DrA}$ und die durch das elektrische Anregungssignal $u_2$ bewirkte Antrieb-Klemmenspannung $u_{DrA}$ des elektromagnetischen Antriebs (4) durch Messung erfasst werden, aus dem Antrieb-Klemmenstrom $i_{DrA}$ und der Antrieb-Klemmenspannung $u_{DrA}$ die Antrieb-Leistung $S_{DrA}$ bestimmt wird,
   wobei bei Überschreitung eines vorgegebenen maximalen Antrieb-Klemmenstroms $i_{DrA-max}$ durch den Antrieb-Klemmenstrom $i_{DrA}$ und/oder bei Überschreitung einer vorgegebenen maximalen Antrieb-Klemmenspannung $u_{DrA-max}$ durch die Antrieb-Klemmenspannung $u_{DrA}$ und/oder bei Überschreitung einer vorgegebenen maximalen Antrieb-Leistung $S_{DrA-max}$ durch die Antrieb-Leistung $S_{DrA}$ das elektrische Anregungssignal $u_2$ so auf einen Schrankenwert $u_{2-B}$ beschränkt wird, dass der Antrieb-Klemmenstrom $i_{DrA}$ unterhalb des vorgegebenen maximalen Antrieb-Klemmenstroms $i_{DrA-max}$ und die Antrieb-Klemmenspannung $u_{DrA}$ unterhalb der vorgegebenen maximalen Antrieb-Klemmenspannung $u_{DrA-max}$ und die Antrieb-Leistung $S_{DrA}$ unterhalb der maximalen Antrieb-Leistung $S_{DrA-max}$ bleibt.

2. Verfahren nach Anspruch 1, **dadurch gekennzeichnet, dass** aus dem gemessenen Antrieb-Klemmenstrom $i_{DrA}$ und aus der gemessenen Antrieb-Klemmenspannung $u_{DrA}$ der komplexe Lastleitwert G oder der komplexe Lastwiderstand Z bestimmt wird, mit dem die elektrische Stelleinrichtung (3) belastet wird, und anhand des komplexen Lastleitwerts G und/oder anhand des komplexen Lastwiderstands Z der Schrankenwert $u_{2-B}$ für das elektrische Anregungssignal $u_2$ bestimmt wird.

3. Verfahren nach Anspruch 1 oder 2, **dadurch gekennzeichnet, dass** die Beschränkung des elektrischen Anregungssignals $u_2$ auf den Schrankenwert $u_{2-B}$ erfolgt, indem einer Amplitudenregelung zur Regelung der Amplitude des Schwingelements, ein angepasster, insbesondere geringerer Sollwert für die Amplitude vorgegeben wird.

4. Verfahren nach einem der Ansprüche 1 bis 3, **dadurch gekennzeichnet, dass** die elektrische Stelleinrichtung (3) als gesteuerte Spannungsquelle arbeitet und einerseits aus dem komplexen Lastleitwert G oder dem komplexen Lastwiderstand Z und andererseits aus dem maximalen Antrieb-Klemmenstroms $i_{DrA-max}$ ein Spannungsgrenzwert $u_{DrA-BI}$ als Schrankenwert $u_{2-B}$ und/oder aus der der maximalen Antrieb-Leistung $S_{DrA-max}$ ein Spannungsgrenzwert $u_{DrA-BS}$ als Schrankenwert $u_{2-B}$ berechnet wird.

5. Verfahren nach Anspruch 4, **dadurch gekennzeichnet, dass** sowohl der Spannungsgrenzwert $u_{DrA-BI}$ als Schrankenwert $u_{2-B}$ als auch der Spannungsgrenzwert $u_{DrA-BS}$ als Schrankenwert $u_{2-B}$ berechnet wird und der kleinere der beiden Werte als Schrankenwert $u_{2-B}$ für das elektrische Anregungssignal $u_2$ verwendet wird.

6. Verfahren nach einem der Ansprüche 1 bis 3, **dadurch gekennzeichnet, dass** die elektrische Stelleinrichtung (3) als gesteuerte Stromquelle arbeitet und einerseits aus dem komplexen Lastleitwert G oder dem komplexen Lastwiderstand Z und andererseits aus der maximalen Antrieb-Klemmenspannung $u_{DrA-max}$ ein Stromgrenzwert $i_{DrA-BU}$ als Schrankenwert $u_{2-B}$ und/oder aus der maximalen Antrieb-Leistung $S_{DrA-max}$ ein Stromgrenzwert $i_{DrA-BS}$ als Schrankenwert $u_{2-B}$ berechnet wird.

**7.** Verfahren nach Anspruch 6, **dadurch gekennzeichnet, dass** sowohl der Stromgrenzwert $i_{DrA-BU}$ als Schrankenwert $u_{2-B}$ als auch der Stromgrenzwert $i_{DrA-BS}$ als Schrankenwert $u_{2-B}$ berechnet wird und der kleinere der beiden Werte als Schrankenwert $u_{2-B}$ für das elektrische Anregungssignal $u_2$ verwendet wird.

**Claims**

**1.** Method for operating a resonance measuring system (1), in the form of a Coriolis mass flow meter, wherein the resonance measuring system (1) comprises at least one electrical actuating apparatus (3), at least one electromagnetic drive (4) as an oscillation generator, at least one oscillation element (5) that interacts with a medium, the electrical actuating apparatus (3) making available an electrical excitation signal ($u_2$) for exciting the electromagnetic drive (4), the electromagnetic drive (4) exciting the oscillation element (5) to oscillation in at least one natural form, **characterized in that** the driving terminal current $i_{DrA}$ caused by the electrical excitation signal $u_2$ and the driving terminal voltage $u_{DrA}$ of the electromagnetic drive (4) caused by the electrical excitation signal $u_2$ are detected by measurement and that the parameters of the electromagnetic drive (4) and the drive power SdrA is determined from the driving terminal current $i_{DrA}$ and with the driving terminal voltage $u_{DrA}$, wherein, when exceeding a given maximum drive terminal current $i_{DrA-max}$ by the drive terminal current $i_{DrA}$ and/or when exceeding a predetermined maximum drive terminal voltage $u_{DrA-max}$ by the drive terminal voltage $u_{DrA}$ and/or when exceeding a predetermined maximum drive power $S_{DrA-max}$ by the drive power $S_{DrA}$, the electrical excitation signal $u_2$ is restricted to a threshold value $u_{2-B}$ such that the drive terminal current $i_{DrA}$ remains below the specified maximum drive terminal current $i_{DrA-max}$ and the drive terminal voltage $u_{DrA}$ remains below the specified maximum drive terminal voltage $U_{DrA-max}$ and the drive power $S_{DrA}$ remains below the maximum drive power $S_{DrA-max}$.

**2.** Method according to claim 1, **characterized in that** from the measured drive terminal current $i_{DrA}$ and from the measured drive terminal voltage $u_{DrA}$, the complex load conductance G or the complex load resistance Z is determined, with which the electrical actuating apparatus (3) is loaded, and the threshold value $u_{2-B}$ for the electrical excitation signal $u_2$ is determined based on complex load conductance G and/or based on the complex load resistance Z.

**3.** Method according to claim 1 or 2, **characterized in that** the limitation of the electrical excitation signal $u_2$ to the threshold value $u_{2-B}$ is carried out by specifying to an amplitude control for controlling the amplitude of the vibrating element, an adjusted, in particular lower setpoint value for the amplitude.

**4.** Method according to any one of claims 1 to 3, **characterized in that** the electrical actuating apparatus (3) operates as a controlled voltage source and a voltage limit $u_{DrA-Bl}$ as the limit value $u_{2-B}$ is calculated, on the one hand, from the complex load G or the complex load resistance Z and, on the other hand, from the maximum drive terminal current $i_{DrA-max}$ and/or a voltage limit value $u_{DrA-BS}$ is calculated as the limit value $u_{2-B}$ from the maximum drive power $S_{DrA-max}$.

**5.** Method according to claim 4, **characterized in that** both the voltage limit value $u_{DrA-Bl}$ as the threshold value $u_{2-B}$ and the voltage limit value $u_{DrA-BS}$ as the threshold value $u_{2-B}$ are calculated and the smaller of the two values is used as the threshold value $u_{2-B}$ for the electrical excitation signal $u_2$.

**6.** Method according to any one of claims 1 to 3, **characterized in that** the electrical actuating apparatus (3) operates as a controlled current source and a current limit $i_{DrA-BU}$ as limit value $u_{2-B}$ is calculated, on the one hand, from the complex load G or the complex load resistance Z and, on the other hand, from the maximum drive terminal voltage $u_{DrA-max}$ and/or a current limit value $i_{DrA-BS}$ is calculated as the limit value $u_{2-B}$ from the maximum drive power $S_{DrA-max}$.

**7.** Method according to claim 6, **characterized in that** both the current limit value $i_{DrA-BU}$ as the threshold value $u_{2-B}$ and the current limit value $i_{DrA-BS}$ as the threshold value $u_{2-B}$ are calculated and the smaller of the two values is used as the threshold value $u_{2-B}$ for the electrical excitation signal $u_2$.

**Revendications**

**1.** Procédé pour faire fonctionner un système de mesure par résonance (1) sous la forme d'un débitmètre massique de Coriolis, dans lequel le système de mesure par résonance (1) comprend au moins un dispositif de réglage électrique (3), au moins un entraînement électromagnétique (4) en tant que générateur d'oscillation et au moins un élément oscillant (5) interagissant avec un milieu, le dispositif de réglage électrique (3) fournit un signal d'excitation électrique ($u_2$) pour l'excitation de l'entraînement électromagnétique (4), et l'entraînement électromagnétique (4) excite l'élément oscillant (5) pour qu'il oscille dans au moins un mode propre, **caractérisé en ce que** le courant de borne $i_{DrA}$ induit par le signal d'excitation électrique $u_2$ et la tension de borne $u_{DrA}$ induite par le signal d'excitation électrique $u_2$ de l'entraînement électromagnétique (4) sont détectés par mesure, la puissance d'entraînement $S_{DrA}$ est déterminée à partir du courant de borne d'entraînement $i_{DrA}$ et de la tension de borne d'entraînement $u_{DrA}$, dans lequel si un courant de borne d'entraînement maximal prédéterminé $i_{DrA-max}$ est dépassé par le courant de borne d'entraînement $i_{DrA}$ et/ou si une tension de borne d'entraînement maximale prédéterminée $u_{DrA-max}$ est dépassée par la tension de borne d'entraînement $u_{DrA}$ et/ou si une puissance d'entraînement maximale prédéterminée $S_{DrA-max}$ est dépassée par la puissance d'entraînement $S_{DrA}$, le signal d'excitation électrique $u_2$ est limité à une valeur de seuil $u_{2-B}$ de telle sorte que le courant de borne d'entraînement $i_{DrA}$ reste inférieur au courant de borne d'entraînement maximal prédéterminé $i_{DrA-max}$ et que la tension de borne d'entraînement $u_{DrA}$ reste inférieure à la tension de borne d'entraînement maximale prédéterminée $u_{DrA-max}$ et que la puissance d'entraînement $S_{DrA}$ reste inférieure à la puissance d'entraînement maximale prédéterminée $S_{DrA-max}$.

2. Procédé selon la revendication 1, **caractérisé en ce que** la conductance de charge complexe G ou la résistance de charge complexe Z avec laquelle le dispositif de réglage électrique (3) est chargé est déterminée à partir du courant de borne d'entraînement $i_{DrA}$ mesuré et de la tension de borne d'entraînement $u_{DrA}$ mesurée et **en ce que** la valeur de seuil $u_{2-B}$ est déterminée pour le signal d'excitation électrique $u_2$ sur la base de la conductance de charge complexe G et/ou sur la base de la résistance de charge complexe Z.

3. Procédé selon la revendication 1 ou 2, **caractérisé en ce que** la limitation du signal d'excitation électrique $u_2$ à la valeur de seuil $u_{2-B}$ est réalisée en spécifiant pour l'amplitude, à une unité de régulation d'amplitude destinée à réguler l'amplitude de l'élément oscillant, une valeur de consigne adaptée, en particulier plus faible.

4. Procédé selon l'une des revendications 1 à 3, **caractérisé en ce que** le dispositif de réglage électrique (3) fonctionne en tant que source de tension commandée et **en ce qu'**une valeur limite de tension $u_{DrA-BI}$ est calculée en tant que valeur de seuil $u_{2-B}$ d'une part à partir de la conductance de charge complexe G ou de la résistance de charge complexe Z et d'autre part à partir du courant de borne maximal $i_{DrA-max}$ et/ou **en ce qu'**une valeur limite de tension $u_{DrA-BS}$ est calculée à partir de la puissance d'entraînement maximale $S_{DrA-max}$.

5. Procédé selon la revendication 4, **caractérisé en ce que** la valeur limite de tension $u_{DrA-BI}$ est calculée en tant que valeur de seuil $u_{2-B}$ et **en ce que** la valeur limite de tension $u_{DrA-BS}$ est également calculée en tant que valeur de seuil $u_{2-B}$ et **en ce que** la plus petite des deux valeurs est utilisée en tant que valeur de seuil $u_{2-B}$ pour le signal d'excitation électrique $u_2$.

6. Procédé selon l'une des revendications 1 à 3, **caractérisé en ce que** le dispositif de régalage électrique (3) fonctionne en tant que source de courant commandée et **en ce qu'**une valeur limite de courant $i_{DrA-BU}$ est calculée en tant que valeur de seuil $u_{2-B}$ d'une part à partir de la conductance de charge complexe G ou de la résistance de charge complexe Z et d'autre part à partir de la tension de borne d'entraînement maximale $u_{DrA-max}$ et/ou **en ce qu'**une valeur limite de courant $i_{DrA-BS}$ est calculée en tant que valeur de seuil $u_{2-B}$ à partir de la puissance d'entraînement maximale $S_{DrA-max}$.

7. Procédé selon la revendication 6, **caractérisé en ce que** la valeur limite de courant $i_{DrA-BU}$ est calculée en tant que valeur de seuil $u_{2-B}$ et **en ce que** la valeur limite de courant $i_{DrA-BS}$ est également calculée en tant que valeur de seuil $u_{2-B}$ et **en ce que** la plus petite des deux valeurs est utilisée en tant que valeur de seuil $u_{2-B}$ pour le signal d'excitation électrique $u_2$.

## Fig. 1

## Fig. 2

Fig. 3

Fig. 4

Fig. 5

Fig. 6

Fig. 7

Fig. 8

**EP 2 861 941 B1**

**IN DER BESCHREIBUNG AUFGEFÜHRTE DOKUMENTE**

**In der Beschreibung aufgeführte Patentdokumente**

- US 2007119263 A1
- EP 2418748 A2
- DE 102011012498 A1
- DE 102008059920 A1
- DE 102012011934